(19) Europäisches Patentamt
European Patent Office
Office européen des brevets

(11) **EP 1 568 605 B1**

(12) **FASCICULE DE BREVET EUROPEEN**

(45) Date de publication et mention de la délivrance du brevet:
**28.06.2006 Bulletin 2006/26**

(51) Int Cl.:
*B64C 13/02* *(2006.01)*    *B64C 9/32* *(2006.01)*

(21) Numéro de dépôt: **05290161.8**

(22) Date de dépôt: **25.01.2005**

(54) **Procédé et dispositif pour l'optimisation du braquage des volets déporteurs d'un aéronef en vol**

Verfahren und Vorrichtung zum Optimiern des Spoilerausschlags eines Flugzeuges während des Fluges

Method and device for the optimization of the deployment of the spoiler of an aircraft during flight

(84) Etats contractants désignés:
**AT BE BG CH CY CZ DE DK EE ES FI FR GB GR HU IE IS IT LI LT LU MC NL PL PT RO SE SI SK TR**

(30) Priorité: **24.02.2004 FR 0401827**

(43) Date de publication de la demande:
**31.08.2005 Bulletin 2005/35**

(73) Titulaire: **AIRBUS France**
**31060 Toulouse (FR)**

(72) Inventeur: **Seve, Philippe**
**31850 Montrabe (FR)**

(74) Mandataire: **Bonnetat, Christian**
**CABINET BONNETAT**
**29, rue de St. Pétersbourg**
**75008 Paris (FR)**

(56) Documents cités:
**US-A- 4 372 507**    **US-A- 4 829 220**
**US-B1- 6 561 463**

**Description**

La présente invention concerne un procédé et un dispositif pour l'optimisation du braquage des volets déporteurs d'un aéronef en vol.

On sait que les aéronefs modernes, notamment les avions de transport civil, comportent des volets déporteurs mobiles, encore appelés "aérofreins" ou, en anglais, "spoilers", cf US 6 561 463. De tels volets déporteurs constituent des surfaces aérodynamiques de contrôle et ils sont généralement installés dans l'extrados des ailes, derrière le caisson structural de celles-ci et en avant des volets de bord de fuite sur lesquels reposent leurs propres bords de fuite.

Sous l'action de moyens d'actionnement, par exemple des vérins hydrauliques, électriques ou mécaniques, eux-mêmes commandés à partir d'un levier actionné par le pilote de l'aéronef, lesdits volets déporteurs peuvent prendre :

- soit une position rétractée, pour laquelle ils sont logés dans l'extrados de l'aile correspondante en assurant la continuité aérodynamique dudit extrados ;
- soit l'une ou l'autre de plusieurs positions déployées, pour lesquelles ils font saillie par rapport à l'extrados de l'aile correspondante, en étant inclinés par rapport audit extrados.

Ainsi, en position rétractée, lesdits volets déporteurs s'intègrent dans le profil aérodynamique des extrados des ailes de l'aéronef. En revanche, pour chacune des positions déployées --dont chacune d'elles est associée à une fonction spécifique et est définie par une valeur d'angle de braquage par rapport à l'extrados correspondant-- lesdits volets déporteurs entraînent une diminution de portance et une augmentation de traînée dont les amplitudes dépendent dudit angle de braquage et de la surface desdits volets déporteurs et qui peuvent être utilisées à différentes fins telles que :

- réduction de la vitesse de l'aéronef durant les phases d'atterrissage et, éventuellement, d'interruption de décollage ;
- réduction de la vitesse de l'aéronef en vol ou augmentation de la pente de descente dudit aéronef ;
- plaquage de l'aéronef au sol pour améliorer le freinage pendant les phases d'atterrissage ou d'interruption de décollage ;
- contrôle en vol du roulis de l'aéronef en agissant de façon dissymétrique sur les volets déporteurs des deux ailes ;
- génération d'un moment de lacet par action dissymétrique sur les volets déporteurs des deux ailes participant à contrer les effets d'une panne d'un moteur pendant le décollage ; ou
- aide à la diminution du moment d'encastrement aile/ fuselage, aux forts facteurs de charge (manoeuvres, rafales de vent) en modifiant la répartition de la portance le long des ailes.

Ainsi, les fonctions exercées par les volets déporteurs sont variées.

Cependant, puisque le déploiement desdits volets déporteurs entraîne une perte de portance, l'utilisation de ceux-ci en vol s'accompagne d'une réduction du domaine de vol dudit aéronef. En effet, si le pilote désire compenser au moins en partie cette perte de portance afin de préserver la sécurité et le confort de vol, il doit soit augmenter l'incidence de l'aéronef, soit accélérer ce dernier. Si l'aéronef volait à une incidence voisine de l'incidence maximale, le pilote n'a d'autre choix que d'accélérer. Dans ce cas, le déploiement des volets déporteurs s'accompagne donc d'une réduction du domaine de vol, en ce qui concerne les vitesses. Il en est de même de la capacité de virage, c'est-à-dire de la manoeuvrabilité, de l'aéronef. En effet, un virage nécessite d'augmenter la portance, et donc l'incidence, d'un aéronef. Puisque le déploiement des volets déporteurs limite l'incidence disponible, il limite simultanément la manoeuvrabilité de l'aéronef.

L'objet de la présente invention est de remédier à ces inconvénients en automatisant le braquage des volets déporteurs afin d'optimiser la trajectoire de l'aéronef quelles que soient les conditions de vol, sans restreindre le domaine de vol.

A cette fin, selon l'invention, le procédé pour l'optimisation du braquage des volets déporteurs d'un aéronef en vol, chaque position déployée de ceux-ci étant commandée par le pilote dudit aéronef, est remarquable en ce que, en temps réel :

- on calcule un potentiel d'incidence susceptible d'être consommé par lesdits volets déporteurs sans mettre en danger ledit aéronef ; et
- on braque lesdits volets déporteurs, en direction de la position déployée commandée, en fonction dudit potentiel d'incidence.

Ainsi, selon l'invention, on peut adapter le braquage des volets déporteurs aux conditions de vol de l'avion.

Ledit potentiel d'incidence peut être du type

$$A = \alpha prot - \alpha - m,$$

expression dans laquelle :

- $\alpha$ est l'incidence actuelle dudit aéronef,
- $\alpha prot$ est une valeur prédéterminée d'incidence, qui est inférieure à l'incidence de décrochage de l'aéronef et à partir de laquelle entrent en action des mécanismes automatiques de pilotage évitant que ladite incidence actuelle puisse croître en se rapprochant de ladite incidence de décrochage, et

- m est une marge de sécurité par rapport à αprot.

Ladite marge m peut être constante et, par exemple, égale à 2 ou 3 degrés d'incidence. En revanche, elle peut être variable et, par exemple, fonction de l'angle de roulis de l'aéronef, du facteur de charge vertical de ce dernier et/ou de la différence entre la valeur αprot et la valeur $\alpha_0$ représentant l'incidence à portance nulle.

Pour la mise en oeuvre du procédé conforme à la présente invention, le dispositif comportant un organe à la disposition du pilote dudit aéronef pour commander les moyens d'actionnement des volets déporteurs par l'intermédiaire d'une ligne de commande, est remarquable en ce qu'il comporte, de plus :

- des moyens de calcul recevant la mesure de paramètres de vol et calculant ledit potentiel d'incidence A ; et
- un dispositif d'asservissement qui reçoit ledit potentiel d'incidence A et dont la sortie est constituée par un élément interposé dans ladite ligne de commande.

De façon usuelle, ledit organe à la disposition du pilote peut commander lesdits volets déporteurs par fraction du braquage maximal de ceux-ci, c'est-à-dire que chaque position déployée correspond à une telle fraction.

Ledit élément interposé dans ladite ligne de commande peut alors être un multiplicateur ou un limiteur commandé par ledit organe à la disposition du pilote.

Dans un mode de réalisation avantageux, ledit dispositif d'asservissement comporte :

- un premier amplificateur, dont l'entrée est reliée à ladite ligne de commande et dont le gain est égal au rapport $d\alpha/B_{max}$, dans lequel $d\alpha$ est la diminution de l'incidence $\alpha$ de l'aéronef entraînée par le braquage maximal $B_{max}$ des volets déporteurs ;
- un additionneur dont les deux entrées reçoivent, respectivement, ledit potentiel d'incidence A desdits moyens de calcul et le signal de sortie dudit premier amplificateur ; et
- un second amplificateur, de gain 1/K, reliant la sortie dudit additionneur audit élément de sortie.

Les figures du dessin annexé feront bien comprendre comment l'invention peut être réalisée. Sur ces figures, des références identiques désignent des éléments semblables.

La figure 1 montre, en vol et en perspective du dessus, un avion civil gros porteur.

La figure 2 montre, en vue de dessus schématique, partielle et à plus grande échelle, une aile de l'avion de la figure 1 avec ses volets déporteurs, ses becs de bord d'attaque et ses volets de bord de fuite en position rétractée.

La figure 3 est une vue en coupe schématique, partielle et agrandie, selon la ligne III-III de la figure 2.

La figure 4 montre, en vue semblable à la figure 3, un volet déporteur dans une position déployée.

La figure 5 donne le schéma synoptique d'un dispositif, conforme à la présente invention, pour l'optimisation du braquage des volets déporteurs de l'avion de la figure 1.

La figure 6 est un diagramme illustrant, pour une configuration dudit avion, la variation de la portance de celui-ci en fonction de son incidence.

La figure 7 est un diagramme illustrant le fonctionnement du dispositif conforme à la présente invention.

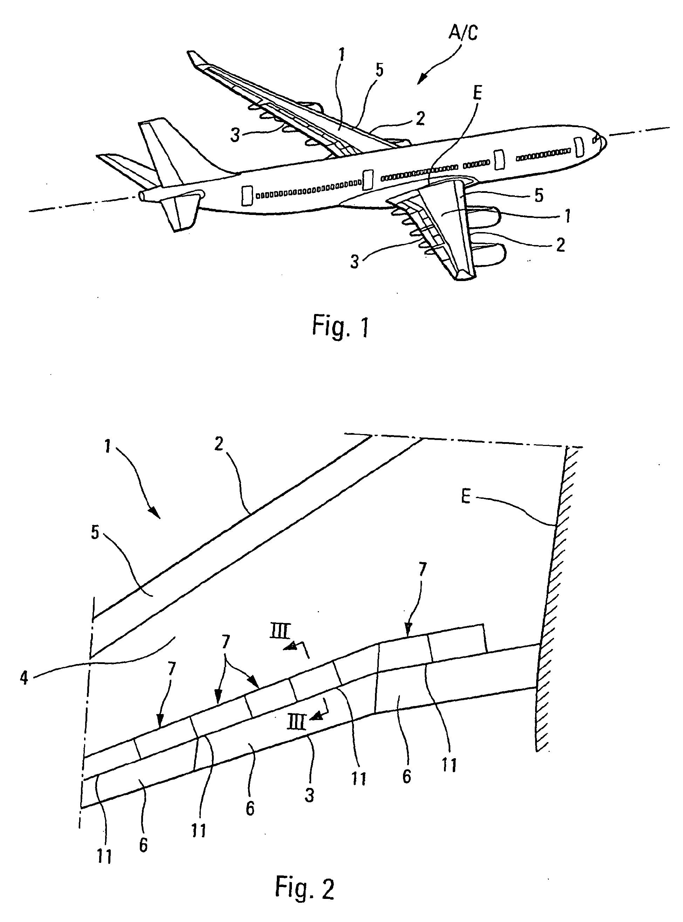

L'avion civil gros porteur A/C représenté sur la figure 1 comporte deux ailes 1.

Comme le montre à plus grande échelle la figure 2, chaque aile 1 comporte un bord d'attaque 2, un bord de fuite 3, un extrados 4 et une emplanture E.

Le bord d'attaque 2 est formé par au moins un bec hypersustentateur 5.

Le bord de fuite 3 de l'aile 1 est formé par la juxtaposition des bords de fuite d'une pluralité de volets de bord de fuite, adjacents, 6.

Dans l'extrados 4, en amont des volets de bord de fuite 6 (par rapport à l'écoulement aérodynamique sur l'aile 1), sont disposés une pluralité de volets déporteurs 7 dont la forme en plan est celle d'un rectangle ou d'un trapèze rectangle.

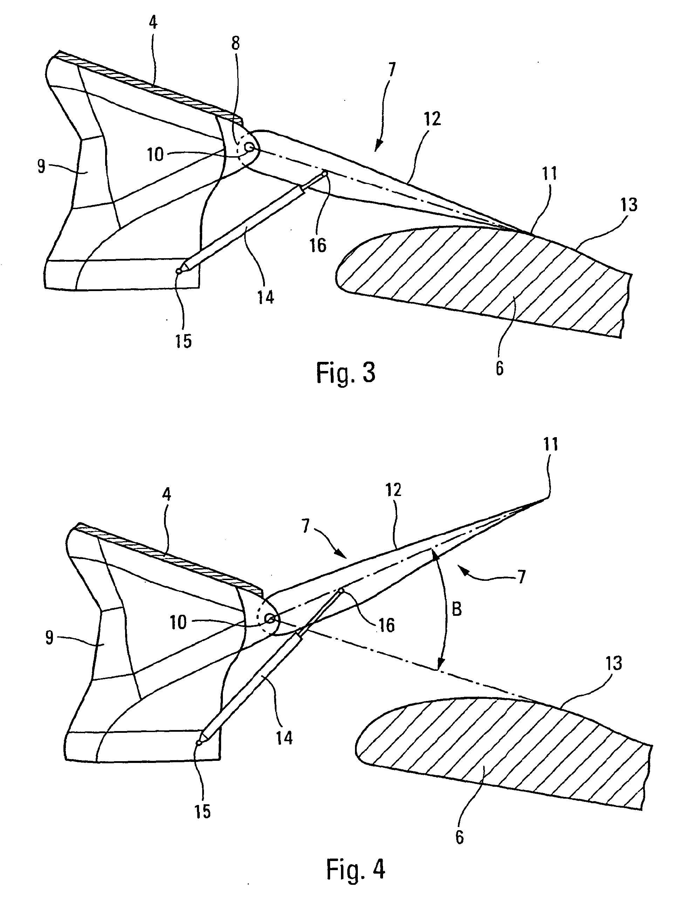

Comme le montre la figure 3, chaque volet déporteur 7 est articulé, du côté de son bord d'attaque 8, à la structure 9 de l'aile 1 autour d'un axe 10, parallèle audit bord d'attaque 8.

Dans la position rétractée représentée sur les figures 2 et 3, le bord de fuite 11 de chaque volet déporteur 7 s'appuie sur un volet de bord de fuite 6 et l'extrados 12 du volet déporteur 7 assure la continuité aérodynamique entre l'extrados 4 de l'aile 1 et l'extrados 13 du volet 6.

De plus, chaque volet déporteur 7 est relié à la structure 9 de l'aile 1 par une jambe inclinée constituée par un vérin 14, dont les extrémités 15 et 16 sont respectivement articulées sur ladite structure 9 et sur ledit volet déporteur 7.

En position rétractée du volet déporteur 7 (figures 2 et 3), le vérin 14 exerce un effort pour maintenir celui-ci en position rétractée.

Lorsque le vérin 14 est activé à l'allongement, le volet déporteur 7 pivote progressivement autour de l'axe 10 en se déployant. Comme cela est montré sur la figure 4, pour une position déployée correspondant à un angle de braquage B, le volet déporteur 7 permet de diminuer la portance et d'augmenter la traînée de l'aile 1 en proportion de la valeur dudit angle de braquage B.

Bien entendu, bien que sur la figure 4 on n'ait représenté qu'une seule position déployée correspondant à une valeur de l'angle de braquage B, il va de soi que le volet déporteur 7 peut occuper une ou plusieurs autres positions déployées, correspondant à d'autres valeurs de cet angle.

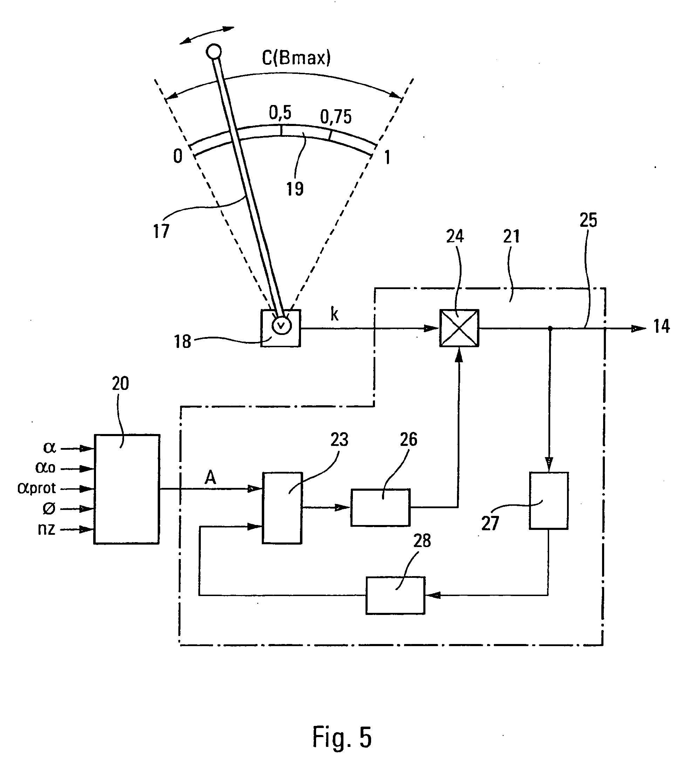

Comme cela est illustré schématiquement par la figure 5, le déploiement et la rétraction des volets déporteurs 7 sont commandés par un levier pivotant 17, à la disposition du pilote, associé à un transducteur 18 transformant la rotation dudit levier 17 en un ordre proportionnel d'actionnement des vérins 14. La course totale C du levier 17 correspond à la valeur maximale $B_{max}$ que peut prendre l'angle de braquage B des volets déporteurs 7.

De façon usuelle, la rotation du levier 17 n'est pas graduée en valeur d'angle de braquage B, mais en fraction ($kB_{max}$) de la valeur maximale $B_{max}$ de déploiement des volets déporteurs 7 (avec $0 \leq k \leq 1$).

Sur la figure 5, on a représenté une échelle 19 de la rotation du levier 17 sur laquelle sont portées les valeurs 0 - 0,5 - 0,75 et 1 de k. Sur cette figure, le levier 17 est représenté dans la position correspondant à 0,25 $B_{max}$.

Le dispositif de commande du braquage des volets déporteurs 7, représenté sur la figure 5, comporte, en plus du levier 17 et du transducteur 18, un calculateur 20 et un dispositif d'asservissement 21.

Conformément à la présente invention, le calculateur 20 calcule en temps réel un potentiel d'incidence A et, en fonction de la valeur et du signe de ce potentiel d'incidence A, le dispositif d'asservissement 21 augmente ou diminue l'angle de braquage B commandé à partir du levier 17. L'angle de braquage B est optimal lorsque la valeur du potentiel d'incidence A est nulle.

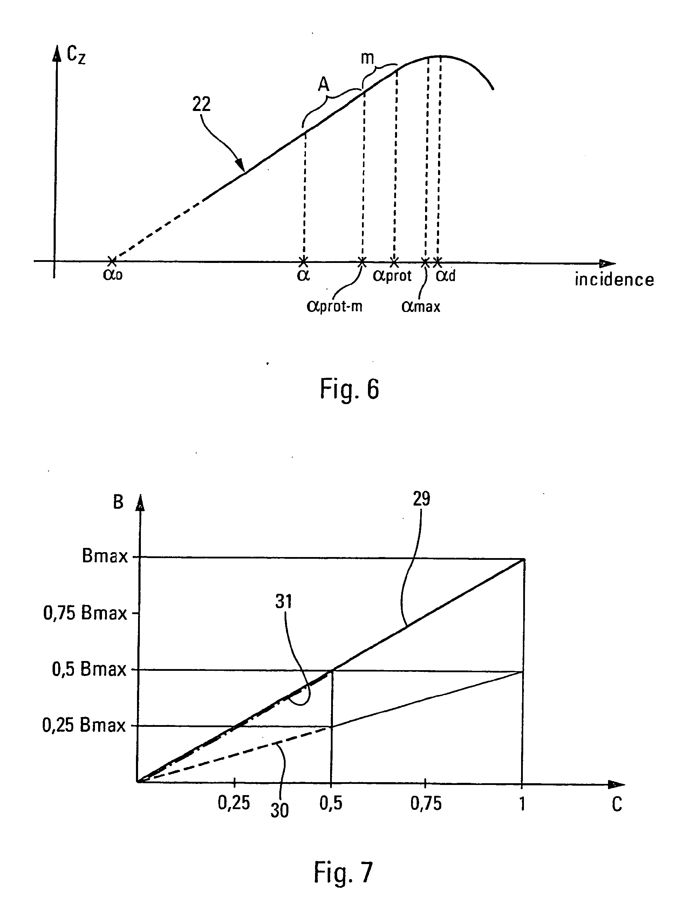

Pour rendre plus concret le fonctionnement du dispositif conforme à la présente invention, on peut se reporter à la figure 6 qui représente, pour une configuration donnée des becs 5 et des volets 6, la variation de la portance de l'aéronef (sous la forme du coefficient de portance Cz) en fonction de l'incidence de l'avion A/C. Une telle variation est représentée par une courbe 22, dont l'allure est bien connue des aérodynamiciens. Sur le diagramme de la figure 6, on a indiqué :

- la valeur d'incidence $\alpha d$, à laquelle, pour la configuration correspondante des becs 5 et des volets 6, l'avion A/C décroche ;
- la valeur d'incidence $\alpha max$, inférieure à $\alpha d$, à laquelle les calculateurs de vol de l'avion A/C prennent autoritairement le contrôle total de ce dernier pour lui imposer une configuration sécurisée ;
- la valeur d'incidence $\alpha prot$, inférieure à $\alpha max$, à laquelle le pilote commence à perdre son autorité sur les volets déporteurs 7, lesdits calculateurs de vol prenant progressivement le contrôle de l'avion A/C pour s'assurer que ce dernier ne prend pas une configuration dangereuse ; et
- la valeur d'incidence $\alpha o$ correspondant à une portance nulle.

Le calculateur 20 reçoit, entre autres paramètres, la valeur $\alpha$ de l'incidence actuelle de l'avion A/C, mesurée de façon usuelle par au moins une sonde d'incidence (non représentée) montée à bord de l'avion A/C, ainsi que la valeur $\alpha prot$, définie ci-dessus, tabulée en fonction du nombre de Mach et de la configuration des becs 5 et des volets 7.

A partir de $\alpha$ et de $\alpha prot$, le calculateur 20 calcule le potentiel d'incidence A égal à $\alpha prot - \alpha - m$, m étant une marge de sécurité (voir la figure 6).

La marge m peut être constante et égale, par exemple, à 2 ou 3 degrés d'incidence. Dans ce cas, la marge constante m est introduite en mémoire du calculateur 20.

En revanche, la marge m peut être plus réaliste et être rendue fonction d'un certain nombre de paramètres tels que l'incidence $\alpha_0$ à portance nulle (définie ci-dessus et tabulée de façon semblable à $\alpha prot$), l'angle de roulis $\Phi$ de l'avion A/C en virage, ou bien encore le facteur de charge vertical nz. Dans ce cas, ces paramètres sont introduits dans le calculateur 20, comme cela est illustré sur la figure 5, l'angle de roulis $\Phi$ et le facteur de charge nz étant mesurés de façon usuelle à bord de l'avion A/C.

A titre d'exemple de marge variable m, on peut citer les expressions suivantes :

- $m=[1 - \cos(20°)] \times [\alpha prot - \alpha o]$, particulièrement adaptée au cas d'un virage de l'avion A/C avec un angle d'inclinaison $\Phi$ égal à 20°, ce qui est usuel. Toutefois, une telle marge présente l'inconvénient de rester constante pendant toute la durée du virage, ce qui provoque une diminution du braquage des volets déporteurs ;
- $m = [\cos(\Phi) - \cos(20°)] \times [\alpha prot - \alpha o]$, compensée en roulis de sorte que lorsque l'avion A/C s'incline, la marge m diminue, permettant d'effectuer des virages sans rétracter les volets déporteurs ;
- $m = [1/nz - \cos(20°)] \times [\alpha prot - \alpha o]$, permettant d'ajouter à la compensation en roulis (pour $\Phi = 20°$), une compensation en ressource ;
- ou bien encore toute combinaison des expressions ci-dessus :

  on peut, par exemple, définir une marge m compensée en roulis jusqu'à une certaine valeur de l'angle $\Phi$, puis une marge constante au-delà, ce qui permet de laisser les volets déporteurs 7 déployés pour les faibles virages et de commencer à les rétracter lors de virages nécessitant une grande incidence.

Quelle que soit l'expression, constante ou variable, de la marge m, la valeur d'incidence A = $\alpha prot - \alpha - m$ constitue le potentiel d'incidence actuel qui peut être consommé, en toute sécurité, par les volets déporteurs 7, c'est-à-dire qu'il est possible d'augmenter l'angle de braquage B desdits volets déporteurs 7 jusqu'à ce que ce déploiement annule le potentiel d'incidence A.

Si le potentiel d'incidence A était négatif, cela signifierait que l'angle de braquage B des volets 7 est trop grand et qu'il est nécessaire de le réduire.

Dans l'exemple de réalisation du dispositif d'asservissement 21 représenté sur la figure 5, il est prévu un additionneur 23 pour recevoir, sur l'une de ses entrées, le potentiel d'incidence A, calculé par le calculateur 20. Ce dispositif d'asservissement 21 comporte de plus :

- un multiplicateur 24, disposé dans la ligne 25 reliant le transducteur 18 aux vérins 14 ;
- un amplificateur 26, de gain 1/K, reliant la sortie de l'additionneur 23 au multiplicateur 24, le facteur K étant égal au rapport $d\alpha/B_{max}$ dans lequel $d\alpha$ est la diminution de l'incidence $\alpha$ de l'avion A/C entraînée par le braquage maximal $B_{max}$ des volets déporteurs ;
- un amplificateur 27, de gain K, recevant le signal de braquage commandé véhiculé par la ligne 25 et l'adressant avec amplification par le gain K et filtrage par le filtre 28, à l'autre entrée de l'additionneur 23.

Ainsi, lorsque le pilote de l'avion A/C actionne le levier 17, le braquage commandé des volets déporteurs 7 est détecté par l'amplificateur 27, qui transforme ce braquage commandé en une quantité d'incidence $\Delta\alpha$ correspondante. Après filtrage par le filtre 28, cette quantité d'incidence $\Delta\alpha$, qui est une estimation de l'incidence consommée actuellement par les aérofreins, est additionnée au potentiel d'incidence A dans l'additionneur 23. A la sortie de celui-ci, c'est donc une estimation en temps réel de la quantité d'incidence disponible pour être consommée par les volets déporteurs 7, qui est transmise à l'amplificateur 26. Ce dernier transforme alors cette estimation d'incidence disponible en une estimation en temps réel de la quantité d'angle de braquage disponible pour les volets déporteurs 7.

Ainsi, lors d'une demande de braquage des volets déporteurs 7 par le pilote, le dispositif d'asservissement 21 évalue l'ordre exact de braquage correspondant à la consommation du potentiel d'incidence A disponible. Au fur et à mesure du braquage des volets déporteurs 7, cet ordre est corrigé en fonction de la réaction de l'avion (mesurée par le calculateur 20) pour finalement atteindre exactement le braquage commandé.

En régime permanent, c'est-à-dire un braquage commandé constant et des paramètres constants à l'entrée du calculateur 20, le potentiel d'incidence A est nul, montrant que la commande de braquage est atteinte.

Le fonctionnement du dispositif d'asservissement 21 est réglé de façon que la commande des volets déporteurs 7 qu'il engendre ne soit ni trop lente, ni trop rapide. Son temps de réponse peut être de l'ordre de quelques secondes, par exemple 5 s, pour ne pas nuire au bon fonctionnement des lois de pilotage, plus rapides.

On remarquera que, en cas de panne de certains volets déporteurs, la présente invention adapte automatiquement le braquage des volets déporteurs restant en fonctionnement pour tendre à atteindre l'objectif commandé.

Comme cela est représenté sur la figure 7, si le pilote commande le braquage maximal des volets déporteurs 7 (le levier 17 est sur la position 1 de l'échelle 19), le braquage B de ces derniers s'effectue linéairement selon une ligne 29. Si en revanche, le levier 17 est, par exemple, amené sur la position 0,5 de l'échelle 19, le braquage des volets déporteurs 7 s'effectuera proportionnellement pour atteindre 0,25 $B_{max}$ (courbe 30 en pointillés).

Si l'on désire obtenir, par exemple, un braquage de 0,5 $B_{max}$ pour la position 0,5 du levier 17, on peut remplacer le multiplicateur 24 par un limiteur commandé par la position dudit levier 17. On pourra ainsi obtenir une commande telle que celle représentée par la ligne 31 en traits mixtes sur la figure 7, en partie confondue avec la figure 29.

Ainsi, de ce qui précède, on constate que la présente invention permet d'adapter le braquage des volets déporteurs 7 aux conditions de vol de l'avion, alors que, dans la technique antérieure, on adopte un braquage forfaitaire restreignant le domaine de vol de l'avion.

Grâce à la présente invention :

- le pilote peut continuer à voler à la vitesse courante et manoeuvrer sans restriction supplémentaire, le braquage des volets déporteurs s'adaptant automatiquement à son pilotage. Auparavant, la sortie des volets déporteurs le forçait parfois à accélérer (ce qui est paradoxal lorsque l'on sort des surfaces aérodynamiques qui freinent) ou limitait trop son angle de virage ;
- l'avion peut rechercher le meilleur angle de descente pour chaque vitesse. Sur certains avions, l'angle de descente le plus fort n'est pas nécessairement associé à la vitesse la plus grande (au contraire de la vitesse de descente) ; et
- l'avion peut disposer de braquages plus étendus pour les volets déporteurs, ces braquages n'étant plus limités par le choix de l'avionneur d'un compromis global entre la capacité de descente et le domaine de vol de l'avion. La capacité de descente s'en trouvera accrue.

## Revendications

1. Procédé pour l'optimisation du braquage des volets déporteurs (7) d'un aéronef (A/C) en vol, chaque position déployée de ceux-ci étant commandée par le pilote dudit aéronef,
**caractérisé en ce que**, en temps réel :

   - on calcule un potentiel d'incidence (A) susceptible d'être consommé par lesdits volets déporteurs (7) sans mettre en danger ledit aéronef ; et

- on braque lesdits volets déporteurs (7), en direction de la position déployée commandée, en fonction dudit potentiel d'incidence (A).

2. Procédé selon la revendication 1,
**caractérisé en ce que** ledit potentiel d'incidence (A) est du type

$$A = \alpha prot - \alpha - m,$$

expression dans laquelle :

- $\alpha$ est l'incidence actuelle dudit aéronef,
- $\alpha prot$ est une valeur prédéterminée d'incidence, qui est inférieure à l'incidence de décrochage de l'aéronef et à partir de laquelle entrent en action des mécanismes automatiques de pilotage évitant que ladite incidence actuelle puisse croître en se rapprochant de ladite incidence de décrochage, et
- m est une marge de sécurité par rapport à $\alpha prot$.

3. Procédé selon la revendication 2,
**caractérisé en ce que** ladite marge m est constante.

4. Procédé selon la revendication 3,
**caractérisé en ce que** ladite marge constante est de l'ordre de 2 ou 3 degrés d'incidence.

5. Procédé selon la revendication 2,
**caractérisé en ce que** ladite marge m est fonction de l'angle de roulis dudit aéronef.

6. Procédé selon la revendication 2,
**caractérisé en ce que** ladite marge m est fonction du facteur de charge vertical dudit aéronef.

7. Dispositif pour la mise en oeuvre du procédé selon l'une quelconque des revendications 1 à 6, comportant un organe (17) à la disposition du pilote dudit aéronef (A/C) pour commander les moyens d'actionnement (14) des volets déporteurs (7) par l'intermédiaire d'une ligne de commande (25),
**caractérisé en ce qu'**il comporte :

- des moyens de calcul (20) recevant la mesure de paramètres de vol et calculant ledit potentiel d'incidence (A); et
- un dispositif d'asservissement (21) qui reçoit ledit potentiel d'incidence (A) et dont la sortie est constituée par un élément (24) interposé dans ladite ligne de commande (25).

8. Dispositif selon la revendication 7, dans lequel ledit organe (17) commande lesdits volets déporteurs (7) par fraction (k) du braquage maximal ($B_{max}$) de ceux-ci,
**caractérisé en ce que** ledit élément (24) est un multiplicateur.

9. Dispositif selon la revendication 7, dans lequel ledit organe (17) commande lesdits volets déporteurs (7) par fraction (k) du braquage maximal ($B_{max}$) de ceux-ci,
**caractérisé en ce que** ledit élément (24) est un limiteur commandé par ledit organe (17).

10. Dispositif selon l'une des revendications 7 à 9,
**caractérisé en ce que** ledit dispositif d'asservissement (21) comporte :

- un premier amplificateur (27), dont l'entrée est reliée à ladite ligne de commande (25) et dont le gain K est égal au rapport $d\alpha/B_{max}$, dans lequel $d\alpha$ est la diminution de l'incidence $\alpha$ de l'aéronef entraînée par le braquage maximal $B_{max}$ des volets déporteurs ;
- un additionneur (23) dont les deux entrées reçoivent, respectivement, ledit potentiel d'incidence (A) desdits moyens de calcul (20) et le signal de sortie dudit premier amplificateur (27) ; et
- un second amplificateur (26), de gain 1/K, reliant la sortie dudit additionneur (23) audit élément de sortie (24).

## Claims

1. A process for optimizing the deflection of the spoiler flaps (7) of an aircraft (A/C) in flight, each deployed position of said spoiler flaps being controlled by the pilot of said aircraft,
**characterized in that**, in real time:

- an incidence potential (A) liable to be consumed by said spoiler flaps (7) without endangering said aircraft is computed; and
- said spoiler flaps (7) are deflected, toward the instructed deployed position, as a function of said incidence potential (A).

2. The process as claimed in claim 1,
**characterized in that** said incidence potential (A) is of the type

$$A = \alpha prot - \alpha - m,$$

in which expression:

- $\alpha$ is the current incidence of said aircraft;
- $\alpha$prot is a predetermined value of incidence, which is less than the stalling incidence of the aircraft and onward of which there come into action automatic piloting mechanisms preventing said current incidence from being able to increase while approaching said stalling incidence, and
- m is a safety margin with respect to $\alpha$prot.

3. The process as claimed in claim 2, **characterized in that** said margin m is constant.

4. The process as claimed in claim 3, **characterized in that** said constant margin is of the order of 2 or 3 degrees of incidence.

5. The process as claimed in claim 2, **characterized in that** said margin m is dependent on the angle of roll of said aircraft.

6. The process as claimed in claim 2, **characterized in that** said margin m is dependent on the vertical load factor of said aircraft.

7. A device for the implementation of the process as claimed in anyone of claims 1 to 6, comprising a member (17) at the disposal of the pilot of said aircraft (A/C) for controlling the means of actuation (14) of the spoiler flaps (7) by way of a control line (25), **characterized in that** it comprises:

   - means of computation (20) receiving the measurement of flight parameters and computing said incidence potential (A); and
   - a slaving device (21) which receives said incidence potential (A) and whose output is constituted by an element (24) interposed in said control line (25).

8. The device as claimed in claim 7, in which said member (17) controls said spoiler flaps (7) by fraction (k) of the maximum deflection ($B_{max}$) of said spoiler flaps, **characterized in that** said element (24) is a multiplier.

9. The device as claimed in claim 7, in which said member (17) controls said spoiler flaps (7) by fraction (k) of the maximum deflection ($B_{max}$) of said spoiler flaps, **characterized in that** said element (24) is a limiter controlled by said member (17).

10. The device as claimed in anyone of claims 7 to 9, **characterized in that** said slaving device (21) comprises:

- a first amplifier (27), whose input is connected to said control line (25) and whose gain K is equal to the ratio $d\alpha/B_{max}$, in which $d\alpha$ is the decrease in the aircraft's incidence $\alpha$ caused by the maximum deflection $B_{max}$ of the spoiler flaps;
- an adder (23) whose two inputs receive, respectively, said incidence potential A from said means of computation (20) and the output signal from said first amplifier (27); and
- a second amplifier (26), with gain 1/K, connecting the output of said adder (23) to said output element (24).

**Patentansprüche**

1. Verfahren zur Optimierung der Ausstellung von Spoilerklappen (7) eines Flugzeugs (A/C) während eines Fluges, wobei jede ausgefahrene Position derselben von dem Piloten des Flugzeugs gesteuert wird, **dadurch gekennzeichnet, dass** in Echtzeit:

   - eine potentielle Anstellung (A) berechnet wird, die durch die Spoilerklappen (7) ausgeführt werden kann, ohne das Flugzeug in Gefahr zu bringen; und
   - die Spoilerklappen (7) in Richtung der gesteuerten Ausfahrposition in Abhängigkeit von der potentiellen Anstellung (A) ausgefahren werden.

2. Verfahren nach Anspruch 1, **dadurch gekennzeichnet, dass** die potentielle Anstellung (A) in der Art

$$A = \alpha prot - \alpha - m \text{ erfolgt,}$$

einem Ausdruck, in welchem:

   - $\alpha$ die aktuelle Anstellung des Flugzeugs ist,
   - $\alpha$prot ein vorbestimmter Wert der Anstellung ist, der kleiner als der Abrisswinkel des Flugzeugs ist und von dem aus eine Wirkung automatischer Lenkungsmechanismen erfolgt, die vermeiden, dass die aktuelle Anstellung zunehmen könnte und sich dem Abrisswinkel nähert, und
   - m ein Sicherheitsbereich im Verhältnis zu $\alpha$prot ist.

3. Verfahren nach Anspruch 2, **dadurch gekennzeichnet, dass** der Bereich m konstant ist.

**4.** Verfahren nach Anspruch 3, **dadurch gekennzeichnet, dass** der konstante Bereich eine Größenordnung von 2 oder 3 Grad Anstellung hat.

**5.** Verfahren nach Anspruch 2, **dadurch gekennzeichnet, dass** der Bereich m abhängig vom Rollwinkel des Flugzeugs ist.

**6.** Verfahren nach Anspruch 2, **dadurch gekennzeichnet, dass** der Bereich m abhängig vom vertikalen Belastungsfaktor des Flugzeugs ist.

**7.** Vorrichtung zur Durchführung des Verfahrens nach einem der Ansprüche 1 bis 6, mit einem Element (17) zur wahlfreien Betätigung durch den Piloten des Flugzeugs (A/C), um die Wirkelemente (14) der Spoilerklappen (7) mithilfe einer Steuerleitung (25) zu steuern, **dadurch gekennzeichnet, dass** diese umfasst:

- Berechnungsmittel (20), welche die Messung von Flugparametern erhalten und die potentielle Anstellung (A) berechnen; und
- eine Regelungseinrichtung (21), welche die potentielle Anstellung (A) erhält, und deren Ausgang durch ein Element (24) gebildet wird, das in der Steuerleitung (25) angeordnet ist.

**8.** Vorrichtung nach Anspruch 7, in welcher das Element (17) die Spoilerklappen (7) um einen Bruchteil (k) der Maximalausstellung (Bmax) derselben steuert, **dadurch gekennzeichnet, dass** das Element (24) ein Multiplikator ist.

**9.** Vorrichtung nach Anspruch 7, in welcher das Element (17) die Spoilerklappen (7) um einen Bruchteil (k) der maximalen Ausstellung (Bmax) derselben steuert, **dadurch gekennzeichnet, dass** das Element (24) ein Begrenzer ist, der durch das Element (17) gesteuert wird.

**10.** Vorrichtung nach einem der Ansprüche 7 bis 9, **dadurch gekennzeichnet, dass** die Regelungseinrichtung (21) aufweist:

- einen ersten Verstärker (27), dessen Eingang mit der Steuerleitung (25) verbunden ist und dessen Verstärkungsgrad K gleich dem Verhältnis da/Bmax ist, in welchem dα die Verminderung des Anstellwinkels α des Flugzeugs ist, die sich durch die maximale Ausstellung Bmax der Spoilerklappen ergibt;
- ein Additionsglied (23), dessen zwei Eingänge jeweils die potentielle Anstellung (A) von den Berechnungsmitteln (20) und das Ausgangssignal des ersten Verstärkers (27) erhalten; und
- einen zweiten Verstärker (26), mit einer Verstärkungsstufe 1/K, welcher den Ausgang des Additionsgliedes (23) mit dem Ausgangselement (24) verbindet.

Fig. 1

Fig. 2

Fig. 3

Fig. 4

C(Bmax)

0,5    0,75

0                    1

19

17

18    k

24    21    25

14

20

α
αo
αprot
Ø
nz

A    23    26

27

28

Fig. 5

Fig. 6

Fig. 7